# EUROPEAN PATENT APPLICATION

(11) **EP 4 679 559 A1**
(43) Date of publication of application: **14.01.2026**
(21) Application number: 25172366.4
(22) Date of filing: 24.04.2025
(51) Int. Cl.: H01M 10/42, H01M 50/213, H01M 50/528, H01M 50/591, H01M 50/593

(54) **BATTERY STRUCTURE AND BATTERY PACK**

(30) Priority: 11.07.2024 CN 202421642041 U; 11.10.2024 WO PCT/CN2024/124103
(71) Applicant: Eve Energy Co., Ltd., Huizhou, Guangdong 516006 (CN)
(72) Inventor: CHEN, Zebin, Huizhou, 516006 (CN); CAO, Lang, Huizhou, 516006 (CN); ZHONG, Xu, Huizhou, 516006 (CN)
(74) Representative: HGF

(57) **Abstract**

Provided are a battery structure and a battery pack. The battery structure includes a first housing (1) and a battery (11) assembled within the first housing (1); and a second housing (2) and a capacitor (21) assembled within the second housing (2). A positive terminal of the battery (11) is provided with a first positive output member (12), and a cover plate of the battery (11) serves as a negative terminal of the battery (11). A positive terminal of the capacitor (21) is provided with a second positive output member (22), and a negative terminal of the capacitor (21) is provided with a negative output member (23).

## Description

### TECHNICAL FIELD

The present application relates to the field of battery technology, for example, a battery structure and a battery pack.

### BACKGROUND

Lithium thionyl chloride batteries are widely applied in smart card meters, computer support power supplies, medical devices, wireless communications, oil drilling, portable communication devices, scientific research instruments, remote control data acquisition systems, military applications, and other electric devices. In some application fields such as smart card meters and military applications, power-type lithium thionyl chloride batteries are applied.

However, due to voltage lag and safety risks in use, the use of the power-type batteries is affected. Therefore, a combined power supply solution of a capacity-type battery plus a capacitor is now introduced. The preparation method in the related art is as follows: a conventional lithium thionyl chloride battery is first manufactured, a supercapacitor with the housing as the positive electrode and the bottom center as the negative electrode that can provide a large current pulse is further manufactured, the lithium thionyl chloride battery is connected to the supercapacitor through a wire, and the connection joint is filled with resin glue to make them an integral battery, thus achieving the large pulse current capability without voltage lag.

The preceding combined battery solution only alleviates the shortcoming of battery discharge performance. The actual assembly process is complex. The glue filling process used in the production process makes the production time too long. In addition, improper gluing and soldering processes are prone to cause quality risks in battery production.

### SUMMARY

In a first aspect, the present application provides a battery structure.

The battery structure includes a first housing, a battery assembled within the first housing, a second housing, and a capacitor assembled within the second housing, where a positive terminal of the battery is provided with a first positive output member, and a cover plate of the battery serves as a negative terminal of the battery, and a positive terminal of the capacitor is provided with a second positive output member, and a negative terminal of the capacitor is provided with a negative output member.

The first housing and the second housing are assembled, the first positive output member and the second positive output member are electrically connected, and the cover plate and the negative output member are electrically connected.

In a second aspect, the present application provides a battery pack. The battery pack includes the preceding battery structure.

In the present application, the glue filling and sealing processes in the related art are not necessarily adopted for preparation, but the assembly process of two housings is adopted for preparation. The newly designed assembly process is simple, which can avoid complex production processes such as glue filling and sealing in the production process, and can effectively avoid quality and safety problems that are easily generated in the production process. Moreover, the new design can reduce the production and assembly costs of the battery, improve the efficiency of the entire production process, and improve the overall economic benefits.

More importantly, in the specific production and manufacturing process, the size of the battery structure may be designed to be consistent with the sizes of battery compartments used in the existing applications without re-molding. Moreover, the assembly process of the battery structure is simple, and the battery structure can match the battery compartments in the existing application devices for use and also be compatible with multiple batteries connected in series or in parallel. Consequently, the overall combination is safer and has a more beautiful appearance.

### BRIEF DESCRIPTION OF THE DRAWINGS

FIG. 1 is a view illustrating the structure of a battery structure according to an embodiment of the present application.
FIG. 2 is an exploded view of a battery structure according to an embodiment of the present application.
FIG. 3 is a view illustrating the internal structure of a battery structure according to an embodiment of the present application.
FIG. 4 is another view illustrating the internal structure of a battery structure according to an embodiment of the present application.
FIG. 5 is another view illustrating the internal structure of a battery structure according to an embodiment of the present application.
FIG. 6 is a view illustrating the structure of an insulator in a battery structure according to an embodiment of the present application.
FIG. 7 is another view illustrating the internal structure of a battery structure according to an embodiment of the present application.

### Reference list:

- 1: first housing
- 11: battery
- 111: cover plate
- 12: first positive output member
- 13: insulator
- 131: first assembly groove
- 132: notch
- 133: through hole
- 134: second assembly groove
- 2: second housing
- 21: capacitor
- 22: second positive output member
- 221: positive output column
- 222: connector
- 23: negative output member
- 24: contact spring
- 3: battery cover
- 31: opening

### DETAILED DESCRIPTION

In the description of the present application, it is to be noted that orientations or position relations indicated by terms such as "upper", "lower", "front", "rear", "left", "right", "vertical", "horizontal", "top", "bottom", "in", and "outside" are based on the drawings. These orientations or position relations are intended only to facilitate and simplify the description of the present application and not to indicate or imply that a device or element referred to must have such particular orientations or must be configured or operated in such particular orientations. Thus, these orientations or position relations are not to be construed as limiting the present application.

Unless otherwise defined, all technical and scientific terms used herein have the same meanings as those commonly understood by those skilled in the art to which the present application pertains. The terms used in the specification of the present application are only used for describing embodiments and not intended to limit the present application.

An embodiment of the present application provides a battery structure, which may be a lithium thionyl chloride capacity-type battery structure.

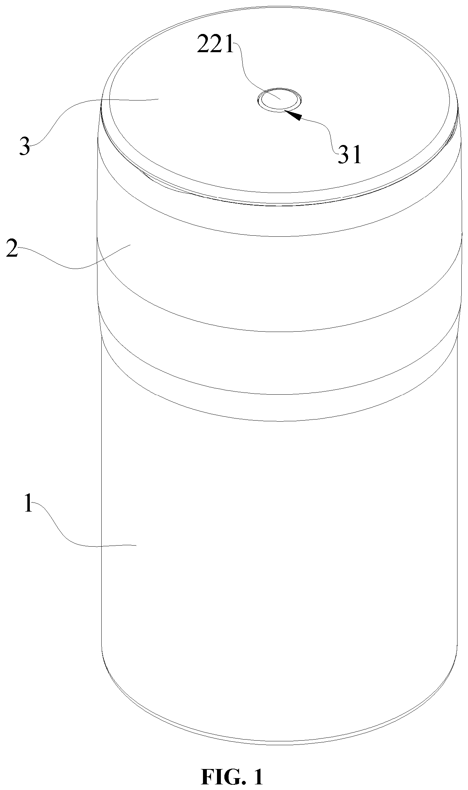

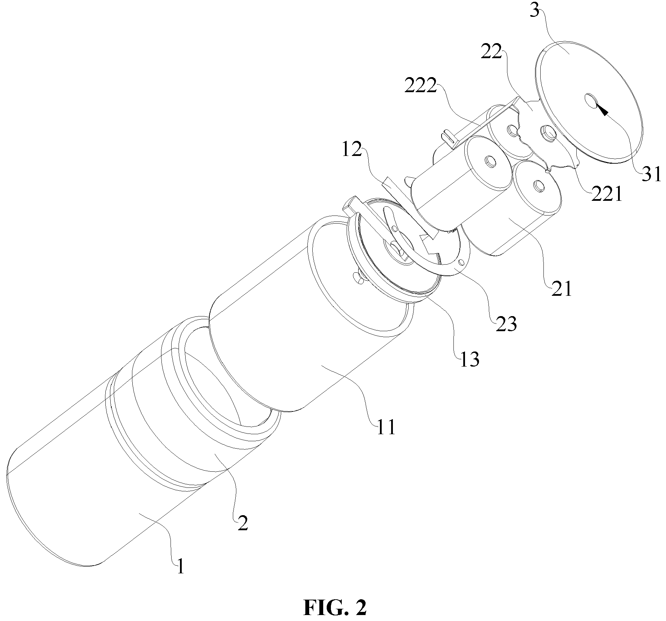

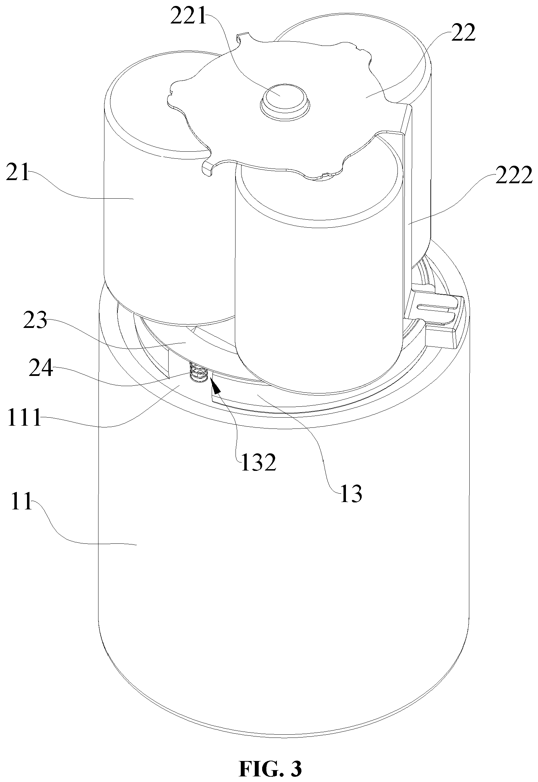

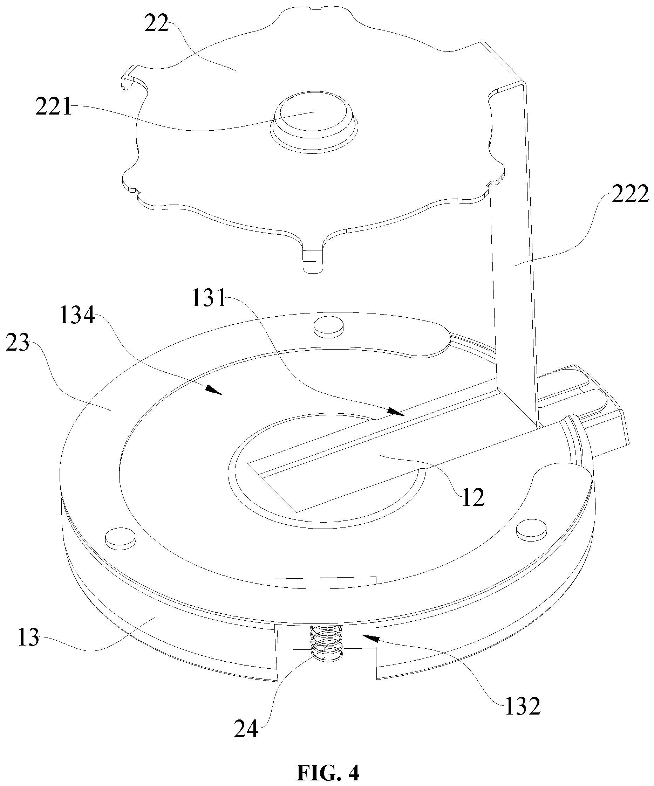

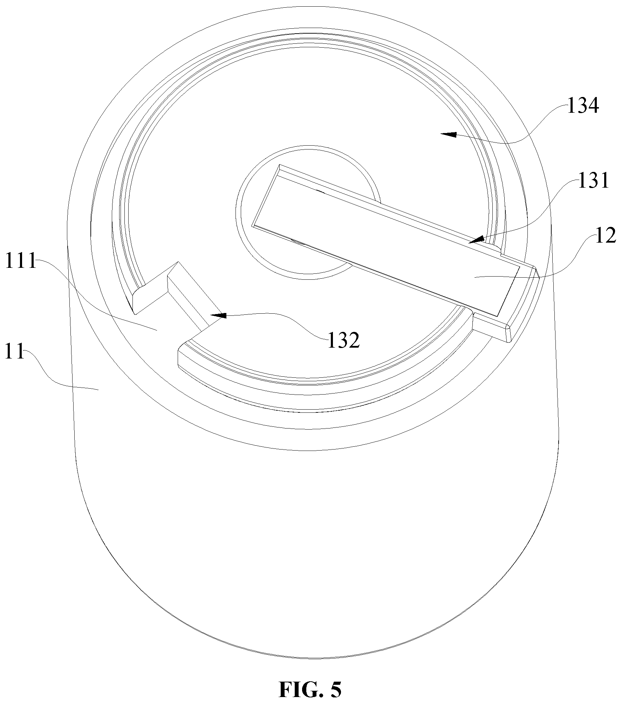

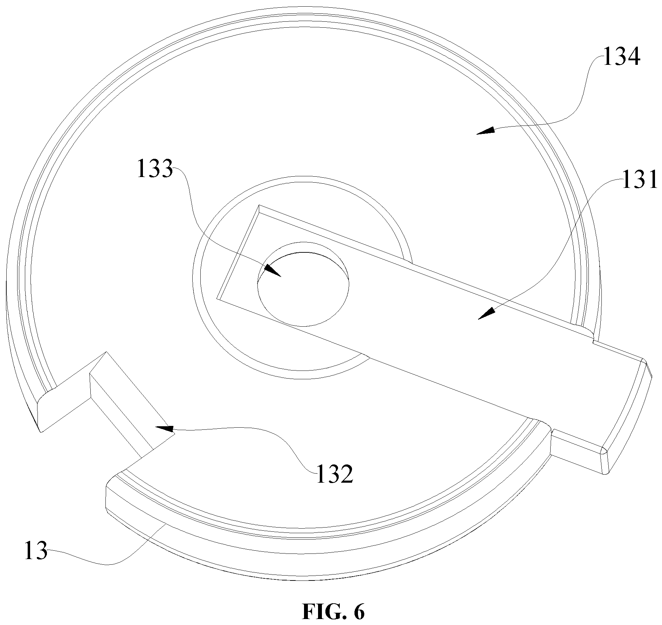

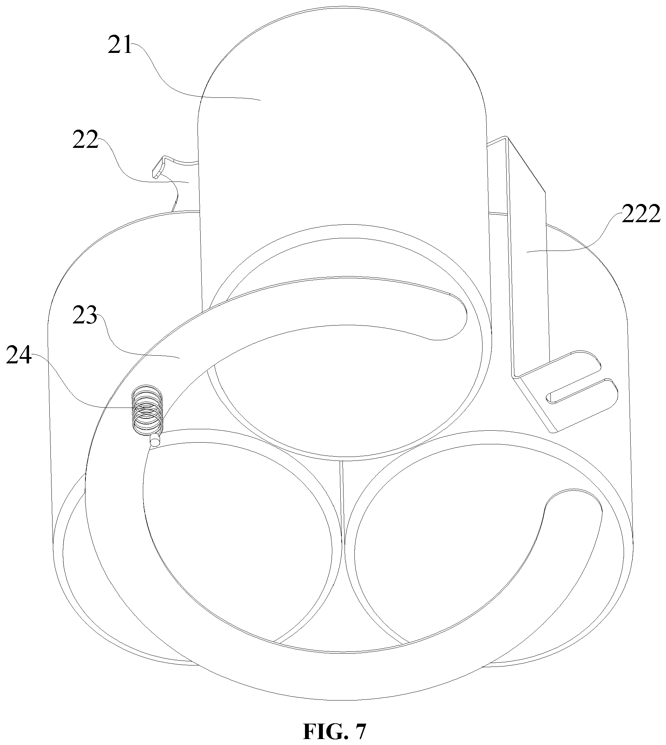

Referring to FIGS. 1 to 7, the battery structure includes a first housing 1 and a battery 11 assembled within the first housing 1, a positive terminal of the battery 11 is provided with a first positive output member 12, and a cover plate 111 of the battery 11 serves as a negative terminal of the battery 11. The battery structure further includes a second housing 2 and a capacitor 21 assembled within the second housing 2, a positive terminal of the capacitor 21 is provided with a second positive output member 22, and a negative terminal of the capacitor 21 is provided with a negative output member 23. The first housing 1 and the second housing 2 are assembled, the first positive output member 12 and the second positive output member 22 are electrically connected, and the cover plate 111 and the negative output member 23 are electrically connected.

In this embodiment, the design of two housing structures that may be assembled is adopted for the battery structure. The assembly structure of the first housing 1 and the second housing 2 is arranged, so the battery 11 and the capacitor 21 are assembled separately, that is, the battery 11 is assembled separately into the first housing 1, and the capacitor 21 is assembled separately into the second housing 2; then the first housing 1 and the second housing 2 are assembled into one; the first positive output member 12 of the battery 11 and the second positive output member 22 of the capacitor 21 are electrically connected, and the cover plate 111 of the battery 11 and the negative output member 23 of the capacitor 21 are electrically connected to ensure that the battery structure can be used normally. It can be seen that in the present application, the glue filling and sealing processes in the related art are not necessarily for preparation, but the assembly process of two housings is adopted for preparation. The newly designed assembly process is simple, without complex production processes such as glue filling and sealing in the production process, which can effectively avoid quality and safety problems that are easily generated in the production process. Moreover, the new design can reduce the production and assembly costs of the battery 11, and improve the efficiency of the entire production process and the overall economic benefits.

More importantly, in the production and manufacturing process, the size of the battery structure can be designed to be consistent with the sizes of battery compartments used in existing applications without re-molding. Moreover, the battery structure has a simple assembly process, and can match the battery compartments in the existing application devices for use and also be compatible with multiple batteries connected in series or in parallel. Consequently, the overall combination has a more beautiful appearance and is safer.

In one or more embodiments, the battery 11 may be a lithium sub-capacity-type battery. In one or more other embodiments, the battery 11 may be a lithium sub-capacity-type battery with a rated capacity corresponding to a lithium sub-power-type battery. For example, the rated capacity may be 13 Ah, 14 Ah, or 15 Ah. In this manner, the internal structure design of the battery remains unchanged, for example, including conventional metallic lithium, a carbon positive electrode, a diaphragm, an electrolyte, a current collector, a steel housing, a cover plate, and other components, so that the capacity of the battery can meet the corresponding required capacity of a power-type battery.

In one or more embodiments, the height of the battery 11 is reduced compared to the height of an existing lithium thionyl chloride battery. For example, the overall height h1 of the battery 11 may be in the range of 30 mm ≤ h1 ≤ 50 mm. In this manner, the capacity of the battery 11 is still comparable to that of the power-type battery while the height can be reduced, which can effectively save the cost of the battery 11 and the space occupied by the battery 11.

In one or more embodiments, the thickness d2 of the housing wall of the first housing 1 may be in the range of 0.1 mm ≤ d2 ≤ 1 mm. For example, the thickness d2 of the housing wall of the first housing 1 may be 0.1 mm, 0.2 mm, 0.3 mm, 0.4 mm, 0.5 mm, 0.6 mm, 0.7 mm, 0.8 mm, 0.9 mm, or 1 mm. Certainly, in some other embodiments, the thickness d2 of the housing wall of the first housing 1 may also be another value in the range of 0.1 mm ≤ d2 ≤ 1 mm.

In one or more embodiments, optionally, the thickness d3 of the housing wall of the second housing 2 is in the range of 0.1 mm ≤ d3 ≤ 1 mm. For example, the thickness d3 of the housing wall of the second housing 2 may be 0.1 mm, 0.2 mm, 0.3 mm, 0.4 mm, 0.5 mm, 0.6 mm, 0.7 mm, 0.8 mm, 0.9 mm, or 1 mm. Certainly, in some other embodiments, the thickness d3 of the housing wall of the second housing 2 may also be another value in the range of 0.1 mm ≤ d3 ≤ 1 mm.

In one or more embodiments, the height h1 of the battery 11 may be in the range of 30 mm ≤ h1 ≤ 50 mm. For example, the height h1 of the battery 11 may be 30 mm, 32 mm, 35 mm, 38 mm, 40 mm, 42 mm, 45 mm, 48 mm, or 50 mm. Certainly, in some other embodiments, the height h1 of the battery 11 may also be another value in the range of 30 mm ≤ h1 ≤ 50 mm.

In one or more embodiments, the height h2 of the first housing 1 may be in the range of 30 mm ≤ h2 ≤ 50 mm. For example, the height h2 of the first housing 1 may be 30 mm, 32 mm, 35 mm, 38 mm, 40 mm, 42 mm, 45 mm, 48 mm, or 50 mm. Certainly, in some other embodiments, the height h2 of the first housing 1 may also be another value in the range of 30 mm ≤ h2 ≤ 50 mm.

In one or more embodiments, the height h3 of the second housing 2 may be in the range of 20 mm ≤ h3 ≤ 30 mm. For example, the height h3 of the second housing 2 may be 20 mm, 21 mm, 22 mm, 23 mm, 24 mm, 25 mm, 26 mm, 27 mm, 28 mm, 29 mm, or 30 mm. Certainly, in some other embodiments, the height h3 of the second housing 2 may also be another value in the range of 20 mm ≤ h3 ≤ 30mm.

In one or more embodiments, the overall height h4 of the assembly combination of the first housing 1 and the second housing 2 is in the range of 50 mm≤ h4 ≤ 80 mm. For example, the overall height h4 of the assembly combination of the first housing 1 and the second housing 2 may be 50 mm, 52 mm, 55 mm, 58 mm, 60 mm, 62 mm, 65 mm, 68 mm, 70 mm, 72 mm, 75 mm, 78 mm, or 80 mm. Certainly, in some other embodiments, the height h4 of the whole formed by the assembly of the first housing 1 and the second housing 2 may also be another value in the range of 50 mm≤ h4 ≤ 80 mm.

In one or more embodiments, the capacitor 21 may have a diameter of 15 mm and a height of 20 mm, and the second housing 2 for assembling the capacitor 21 may have a diameter of 34 mm and a height of 21 mm, to be better adapted to the actual situations.

To improve the structural stability, in one or more embodiments, an insulator 13 is secured to the cover plate 111 of the battery 11, a first assembly groove 131 is recessed on the insulator 13, and the first positive output member 12 is assembled within the first assembly groove 131. In the assembly structure, the insulator 13 is assembled on the cover plate 111 of the battery 11. For example, the insulator 13 is secured to the cover plate 111 of the battery 11, the insulator 13 is formed with the first assembly groove 131, and the first positive output member 12 may be clamped in the first assembly groove 131, which can effectively limit and secure the position of the first positive output member 12 and improve the overall structural stability and structural strength.

Moreover, to make the first positive output member 12 more compactly connected to the positive terminal of the battery 11, a through hole 133 passing through the insulator 13 may be arranged, and a positive post of the battery 11 may pass through the through hole 133 and be connected to the first positive output member 12 to form the positive terminal of the battery 11.

In one or more embodiments, the insulator 13 may be a plastic cover made of plastic material to prevent unnecessary short circuit problems caused by the contact between other workpieces and the battery 11, improving the overall safety.

In one or more embodiments, the insulator 13 may be circular, and the diameter of the insulator 13 matches the diameter of the cover plate 111 of the battery 11. For example, the diameter of the insulator 13 may be less than or equal to the diameter of the cover plate 111 of the battery 11.

In one or more embodiments, the first positive output member 12 may be structured as a solder tab, and the solder tab may be straight-line-shaped, that is, a straight-line-shaped solder tab.

In one or more embodiments, the thickness d1 of the insulator 13 may be in the range of 0.1 mm ≤ d1 ≤ 1 mm. For example, the thickness d1 of the insulator 13 may be 0.1 mm, 0.2 mm, 0.3 mm, 0.4 mm, 0.5 mm, 0.6 mm, 0.7 mm, 0.8 mm, 0.9 mm, or 1 mm. Certainly, in some other embodiments, the thickness d1 of the insulator 13 may also be another value in the range of 0.1 mm ≤ d1 ≤ 1 mm.

Since the cover plate 111 of the battery 11 serves as the negative terminal of the battery 11 in actual use, to make the structure more compact and facilitate electrical connection with the negative output member 23 of the capacitor 21, in one or more embodiments, a notch 132 passing through the insulator 13 is arranged, a negative connection region is exposed at a position of the cover plate 111 of the battery 11 opposite to the notch 132, and the negative output member 23 passes through the notch 132 and is electrically connected to the negative connection region. In this manner, while the negative output member 23 of the capacitor 21 is prevented from interfering with the insulator 13, the structure can be more compact, thereby saving the cost of the battery 11 and the space of a battery pack.

In one or more embodiments, the number of capacitors 21 may be determined according to the battery 11 in actual applications. For example, multiple capacitors 21 may be provided, such as three capacitors 21, four capacitors 21, or five capacitors 21. In an illustrated embodiment, three capacitors 21 are provided. In the structure, the second positive output member 22 is connected to positive posts of the multiple capacitors 21 to ensure that the multiple capacitors 21 can operate normally and synchronously, thereby improving the overall operation stability.

To make the overall structure more compact, in one or more embodiments, a positive output column 221 protrudes from one end of the second positive output member 22 facing away from the capacitors 21, and the positive output column 221 serves as the positive terminal of the capacitors 21; the second positive output member 22 is connected to a connector 222 arranged beside the circumferential outer side of the capacitors 21; and the connector 222 is electrically connected to the first positive output member 12 and the second positive output member 22 separately. In actual assembly, it is found that the multiple capacitors 21 are spaced apart between the second positive output member 22 connected to the positive posts of the capacitors 21 and the first positive output member 12 connected to the positive post of the battery 11, and the second positive output member 22 and the first positive output member 12 have a certain distance from the multiple capacitors 21. To make the second positive output member 22 of the capacitors 21 and the first positive output member 12 of the battery 11 more compactly connected, the connector 222 is arranged to connect the second positive output member 22 and the first positive output member 12. Moreover, the connector 222 extends from the top of the capacitor 21 with the positive electrode to the bottom of the capacitor 21 with the negative electrode, and the connector 222 is also arranged beside the circumferential outer side of the capacitors 21 so that the structure can be more compact, thereby saving the cost of the battery 11 and the space of the battery pack.

In one or more embodiments, the second positive output member 22 may be L-shaped, Z-shaped, or quincunx-shaped, which is not limited here.

In one or more embodiments, the second positive output member 22 may be structured as a solder tab, and the solder tab may be quincunx-shaped, that is, a quincunx-shaped solder tab.

In one or more embodiments, the negative output member 23 may be structured as a solder tab, and the solder tab may be designed to be straight-line-shaped or crescent-shaped according to the number of capacitors 21. It can be seen that in one or more embodiments, the first positive output member 12, the second positive output member 22, and the negative output member 23 are structured as solder tabs, and the connection through the solder tabs can reduce the production and assembly costs of the battery 11 and improve the efficiency of the entire production process.

In one or more embodiments, the electrical connection between the connector 222 and the first positive output member 12 may be secured in a soldering manner such as resist soldering or laser soldering.

To make the structure easier to assemble, in one or more embodiments, the negative output member 23 is electrically connected to a contact spring 24 located in the notch 132 of the insulator 13 and electrically connected to the cover plate 111 of the battery 11. In this manner, during the assembly, the contact spring 24 may be first soldered to the cover plate 111 of the battery 11 or the negative output member 23, and in some embodiments, the contact spring 24 is soldered to the cover plate 111 of the battery 11, which has a large space and is convenient for a soldering operation; then, when the first housing 1 and the second housing 2 are assembled, the non-soldered end of the contact spring 24 abuts against and contacts the negative output member 23 to complete the electrical connection between the contact spring 24 and the negative output member 23; a spring for physical contact is used at this connection position, and then the first housing 1 and the second housing 2 are spliced and secured so that the problem of difficult spot soldering process at this position can be well solved compared with the process that requires spot soldering at both ends of the contact spring 24.

To make the overall structure more compact, in one or more embodiments, a second assembly groove 134 is recessed at one end of the insulator 13 facing the capacitor 21, and the negative output member 23 is assembled within the second assembly groove 134. In this manner, the position of the second assembly groove 134 can be effectively limited and secured, thereby improving the overall structural stability and structural strength; moreover, the structure can also be more compact, thereby saving the cost of the battery 11 and the space of the battery pack.

Since both the first assembly groove 131 and the second assembly groove 134 are recessed on the insulator 13, the first positive output member 12 is assembled within the first assembly groove 131, and the negative output member 23 is assembled within the second assembly groove 134. To avoid interference between the first positive output member 12 and the negative output member 23, in one or more embodiments, the depth of the first assembly groove 131 is greater than the depth of the second assembly groove 134, to stagger the assembly positions of the first positive output member 12 and the negative output member 23 to avoid the interference.

In one or more embodiments, the shape of the second assembly groove 134 matches the shape of the negative output member 23. In one or more embodiments, the shape is an arc or may be a crescent as shown in the figure.

To facilitate the assembly of the capacitor 21 on the first housing 1, a top end of the second housing 2 facing away from the first housing 1 is arranged as an opening so that the capacitor 21 can be assembled from the opening, thereby improving the operation efficiency. Therefore, to avoid damage to the capacitor 21 caused by the exposure of the opening and improve the overall sealing, the opening at the top end of the second housing 2 is provided with a battery cover 3 to improve the overall safety performance.

Since the positive output column 221 protrudes from the second positive output member 22, to be better connected to an external busbar, an opening 31 passing through the battery cover 3 is arranged, and the positive output column 221 can pass through the opening 31 and extend to the exterior of the entire battery structure so that the battery structure can operate normally. In addition, after the battery cover 3 is added to the top end of the first housing 1, the whole battery structure may be heat-shrunk and encapsulated with a sleeve to complete the overall assembly.

## Claims

1. A battery structure, comprising:
a first housing (1) and a battery (11) assembled within the first housing (1), wherein a positive terminal of the battery (11) is provided with a first positive output member (12), and a cover plate (111) of the battery (11) serves as a negative terminal of the battery (11); and
a second housing (2) and a capacitor (21) assembled within the second housing (2), wherein a positive terminal of the capacitor (21) is provided with a second positive output member (22), and a negative terminal of the capacitor (21) is provided with a negative output member (23),
wherein the first housing (1) and the second housing (2) are assembled, the first positive output member (12) and the second positive output member (22) are electrically connected, and the cover plate (111) and the negative output member (23) are electrically connected.

2. The battery structure according to claim 1, wherein an insulator (13) is secured to the cover plate (111) of the battery (11), a first assembly groove (131) is recessed on the insulator (13), and the first positive output member (12) is assembled within the first assembly groove (131).

3. The battery structure according to claim 2, wherein a notch (132) is arranged to pass through the insulator (13), a negative connection region is exposed at a position of the cover plate (111) of the battery (11) opposite to the notch (132), and the negative output member (23) passes through the notch (132) to be electrically connected to the negative connection region.

4. The battery structure according to claim 2, wherein the first positive output member (12), the second positive output member (22), and the negative output member (23) are structured as solder tabs.

5. The battery structure according to any one of claims 1 to 4, wherein a plurality of capacitors (21) are provided, and the second positive output member (22) is connected to positive posts of the plurality of capacitors (21); and
a positive output column (221) is arranged to protrude from one end of the second positive output member (22) facing away from the plurality of capacitors (21), and the positive output column (221) serves as a positive terminal of the plurality of capacitors (21); the second positive output member (22) is connected to a connector (222) arranged beside a circumferential outer side of the plurality of capacitors (21); the connector (222) is electrically connected to the first positive output member (12) and the second positive output member (22) separately.

6. The battery structure according to claim 5, wherein the connector (222) extends from a top of the plurality of capacitors (21) to a bottom of the plurality of capacitors (21).

7. The battery structure according to claim 5 or 6, wherein the connector (222) is electrically connected to the first positive output member (12) in a soldering manner.

8. **The battery** structure according to claim 3, wherein the negative output member (23) is electrically connected to a contact spring (24); the contact spring (24) is located within the notch (132) of the insulator (13) and is electrically connected to the cover plate (111) of the battery (11).

9. The battery structure according to any one of claims 2 to 8, wherein a second assembly groove (134) is recessed at one end of the insulator (13) facing the capacitor (21), the negative output member (23) is assembled within the second assembly groove (134), and a depth of the first assembly groove (131) is greater than a depth of the second assembly groove (134).

10. The battery structure according to any one of claims 2 to 9, wherein a top end of the second housing (2) facing away from the first housing (1) is arranged as an opening, and the opening at the top end of the second housing (2) is provided with a battery cover (3); and an opening (31) is arranged to pass through the battery cover (3).

11. The battery structure according to any one of claims 2 to 4 and 8 to 10, wherein a thickness d1 of the insulator (13) is in a range of 0.1 mm ≤ d1 ≤ 1 mm;
a thickness d2 of a housing wall of the first housing (1) is in a range of 0.1 mm ≤ d2 ≤ 1 mm; and a thickness d3 of a housing wall of the second housing (2) is in a range of 0.1 mm ≤ d3 ≤ 1 mm.

12. The battery structure according to any one of claims 2 to 4 and 8 to 10, wherein a height h1 of the battery (11) is in a range of 30 mm ≤ h1 ≤ 50 mm;
a height h2 of the first housing (1) is in a range of 30 mm ≤ h2 ≤ 50 mm;
a height h3 of the second housing (2) is in a range of 20 mm ≤ h3 ≤ 30mm; and
an overall height h4 of an assembly combination of the first housing (1) and the second housing (2) is in a range of 50 mm ≤ h4 ≤ 80 mm.

13. The battery structure according to any one of claims 2 to 12, wherein the insulator (13) is made of plastic material.

14. The battery structure according to any one of claims 2 to 13, wherein the insulator (13) is circular, and a diameter of the insulator (13) is less than or equal to a diameter of the cover plate (111).

15. A battery pack, comprising the battery structure according to any one of claims 1 to 14.
